# EUROPEAN PATENT APPLICATION

(11) **EP 4 783 122 A1**
(43) Date of publication of application: **29.07.2026**
(21) Application number: 24880156.5
(22) Date of filing: 17.10.2024
(51) Int. Cl.: G06T 19/00, G06T 7/70, G06T 7/50, G06T 7/60, G06T 15/10, H04N 13/139, H04N 13/327, H04N 13/246, H04N 13/271, H04N 13/332

(54) **AUGMENTED REALITY DEVICE AND OPERATION METHOD THEREFOR**

(30) Priority: 18.10.2023 KR 20230139895; 26.07.2024 KR 20240099710
(71) Applicant: Samsung Electronics Co., Ltd., Suwon-si, Gyeonggi-do 16677 (KR)
(72) Inventor: SHIN, Seunghak, Suwon-si, Gyeonggi-do 16677 (KR); KIM, Songhyeon, Suwon-si, Gyeonggi-do 16677 (KR); JEONG, Jaeyun, Suwon-si, Gyeonggi-do 16677 (KR); KIM, Taekjung, Suwon-si, Gyeonggi-do 16677 (KR); YEO, Yoonjae, Suwon-si, Gyeonggi-do 16677 (KR); JANG, Jaehyun, Suwon-si, Gyeonggi-do 16677 (KR); JI, Seowon, Suwon-si, Gyeonggi-do 16677 (KR); CHOI, Sooryum, Suwon-si, Gyeonggi-do 16677 (KR)
(74) Representative: Appleyard Lees IP LLP
(86) International application number: PCT/KR2024/015820
(87) International publication number: WO 2025/084819

(57) **Abstract**

The present disclosure provides a method by which an augmented reality device outputs an image captured through an image capturing device, as a virtual image through a viewing window. The method may comprise a step of acquiring image data captured through the image capturing device. The method may include a step of acquiring pose information of the image capturing device at a point in time at which image data is captured. The method may include a step of determining a position and an angle of a viewing window on which a virtual image corresponding to the image data is displayed, on the basis of pose information of the image capturing device. The method may include a step of outputting the viewing window in which the virtual image is displayed, on the basis of the determined position and angle.

## Description

### Technical Field

The present disclosure relates to an augmented reality device and an operation method thereof, and to a method by which the augmented reality device determines a location and angle of a viewing window for displaying a virtual image and outputs the virtual image through the viewing window based thereon, and an augmented reality device related thereto.

### Background Art

Augmented Reality (AR) technology is technology for synthesizing a virtual object or information with a real environment so that the virtual object or information is seen as an object existing in a real physical environment. Modern computing and display technology enables development of a system for AR experience, and in the AR experience, an image regenerated digitally or a portion thereof may be considered real, or may be presented to users in a way they may be perceived as reality.

Through AR technology, a virtual image may be overlaid on a real world object and seen together with the real world object in a real-world physical environmental space. With increasing interest in AR technology, the development of various AR-implementing technologies has been actively conducted. AR devices (e.g., smart glasses) utilizing AR technology are usefully applied in everyday lives, for example, in information search, route guidance, video meeting between remote users, and camera shooting.

AR devices are everyday devices capable of obtaining data from a user's point of view. In particular, in smart glasses, AR devices may overlay and display a virtual image on an image of a real-world physical environment.

In an AR environment where a real space and a virtual object co-exist, synchronization between an AR image and a real-world image is required to reduce motion sickness of a user and a sense of difference in the entire image.

### Disclosure of Invention

### Solution to Problem

An aspect of the present disclosure provides a method of outputting a virtual image by an augmented reality device. The operation method of the augmented reality device may include obtaining image data captured by an image capture device. The operation method of the augmented reality device may include obtaining pose information of the image capture device at the time when the image data is captured. The operation method of the augmented reality device may include determining, based on the pose information of the image capture device, a location and angle of a viewing window in which a virtual image corresponding to the image data is displayed. The operation method of the augmented reality device may include outputting the viewing window in which the virtual image is displayed based on the determined location and angle.

An aspect of the present disclosure provides an augmented reality device which outputs a virtual image. The augmented reality device may include a display unit. The augmented reality device may include memory storing a program including at least one instruction. The augmented reality device may include at least one processor. The at least one processor may obtain image data captured by the image capture device, obtain pose information of the image capture device at the time when the image is captured, determine, based on the pose information of the image capture device, a location and angle of the viewing window in which the virtual image corresponding to the image data is displayed, and output a viewing window in which the virtual image is displayed based on the determined location and angle.

An aspect of the present disclosure provides a computer program product including a computer-readable storage medium. The storage medium may store instructions that are readable by an augmented reality device, for executing at least one of the disclosed embodiments of the method in an augmented reality device.

### Brief Description of Drawings

FIG. 1 is a diagram for describing a method by which an augmented reality device determines a location and angle of a viewing window for displaying a virtual image corresponding to image data, and outputs the virtual image based thereon, according to an embodiment of the present disclosure.
FIG. 2 is a flowchart of a method by which an augmented reality device operates, according to an embodiment of the present disclosure.
FIG. 3 is a diagram for describing an operation of capturing image data through an image capture device, according to an embodiment of the present disclosure.
FIG. 4 is a diagram for describing an operation of outputting a virtual image through a viewing window when a user wearing an augmented reality device fixes his or her gaze straight ahead, according to an embodiment of the present disclosure.
FIG. 5 is a diagram for describing an operation of outputting a virtual image through a viewing window when a user wearing an augmented reality device moves his or her gaze, according to an embodiment of the present disclosure.
FIG. 6 is a diagram for describing an operation by which an augmented reality device determines a location and angle of a viewing window, according to an embodiment of the present disclosure.
FIG. 7 is a diagram for describing an operation by which an augmented reality device changes locations and angles of viewing windows based on motion information of an image capture device, according to an embodiment of the present disclosure.
FIG. 8 is a block diagram of an augmented reality device according to an embodiment of the present disclosure.
FIG. 9 is a diagram illustrating an augmented reality device of a glasses type, according to an embodiment of the present disclosure.
FIG. 10 is a block diagram of an image capture device according to an embodiment of the present disclosure.

### Mode for the Invention

Below, embodiments of the present disclosure are described in detail so that a person skilled in the art may easily work the embodiments. However, the present disclosure may be implemented in various different forms and is not limited to the embodiments described herein. In addition, in the drawings, to clearly describe the present disclosure, parts that are irrelevant to the description are omitted, and similar parts are assigned similar drawing symbols throughout the specification.

For embodiments of the present disclosure, general terminology currently used as widely as possible are selected by considering functions of the present disclosure, but may vary depending on the intention of a technician working in the field, precedents, emergence of new technology, etc. In addition, in specific cases, there are terms arbitrarily chosen by the applicant, in which case the meaning thereof is described in detail in the description of the corresponding embodiment. Therefore, terminology used in the present specification should be defined based on the meaning of the term and the overall content of the present disclosure, not simply by the name of the term.

Singular expressions may include plural expressions, unless the context clearly states otherwise. Terminology used herein, including technical or scientific terminology, may have the same meaning as that generally understood by a person having an ordinary knowledge in the technical field described herein.

Throughout the present disclosure, when a part "comprises" or "includes" an element, this indicates that, unless otherwise specified, the part does not exclude other elements, but may further include other elements. In addition, terms such as "... unit" and "... module" used in the present specification refer to a unit for processing at least one function or operation, and the unit may be implemented by hardware, software, or a combination of hardware and software.

Throughout the specification, when a part is "connected" to another part, this includes not only a case where the parts are "directly connected", but also a case where the parts are "electrically connected" with other devices there between. In addition, when a part "comprises" or "includes" an element, this indicates that, unless otherwise specified, the part does not exclude other elements, but may further include other elements.

The expression "configured to ..." used in the present specification may be interchangeably used with, for example, "suitable for", "having the capacity to", "designed to", "adapted to", "made to", or "capable of", depending on the case. The term "configured to ..." may not necessarily indicate "specifically designed to" in terms of hardware. Instead, in some cases, the expression "a system configured to ..." may indicate that the system "is capable of ..." together with other devices or components. For example, the phrase "a processor configured to perform A, B, and C" may indicate an exclusive processor (e.g., an embedded processor) exclusive for performing the corresponding operation, or a generic-purpose processor (e.g., a CPU or an application processor) capable of performing the corresponding operations by executing one or more software programs stored in memory.

'Artificial intelligence (Al)'-related functions according to the present disclosure is operated through a processor and memory. The processor may include one or more processors. In this case, the one or more processors may be generic-purpose processors such as a CPU, an AP, or a digital signal processor (DSP), dedicated graphics processors such as a GPU or a vision processing unit (VPU), or dedicated Al processors such as an NPU. The one or more processors may perform control such that input data is processed, according to predefined operation rules or an Al model stored in the memory. When the one or more processors are dedicated Al processors, the dedicated Al processor may be designed in a hardware structure specialized for processing a specific Al model.

The predefined operation rules and the AI model is characterized by being generated through training. Here, the generation through training indicates that the predefined operation rules or the Al model configured to perform desired characteristics (or, purposes) are generated by training a basic Al model (or, deep learning model) by using various training data according to learning algorithms. Such training may be performed in a device itself in which Al according to the present disclosure is performed, or through a separate server and/or system. Examples of the learning algorithms include supervised learning, unsupervised learning, semi-supervised learning, or reinforcement learning, but are not limited to the examples described above.

The 'Al (or, deep learning model)' may include a plurality of neural network layers. Each of the plurality of neural network layers has a plurality of weight values, and a neural network computation is performed through a computation between a computation result of the previous layer and the plurality of weight values. The plurality of weight values of the plurality of neural network layers may be optimized by a training result of the Al model. For example, the plurality of weight values may be modified so that a loss value or cost value obtained by the AI model during a learning process is reduced or minimized. An Al neural network may include a deep neural network (DNN), such as a convolutional neural network (CNN), a recurrent neural network (RNN), a restricted Boltzmann machine (RBM), a deep belief network (DBN), a bidirectional recurrent deep neural network (BRDNN), or a deep Q-networks, but is not limited to the examples described above.

In the present disclosure, "augmented reality" indicates that a virtual image is also shown within a real-world physical environmental space, or that a real world object and a virtual image are shown together.

In the present disclosure, an "augmented reality device" is a device capable of expressing augmented reality (AR), and the device may display an image including a physical object existing in the real world and a virtual object. The AR device may be not only AR glasses of a glasses-type which a user wears on his or her facial area, but also a head mounted display (HMD) apparatus worn on the head, or an AR helmet.

Below, the present disclosure is described in detail with reference to the accompanying drawings.

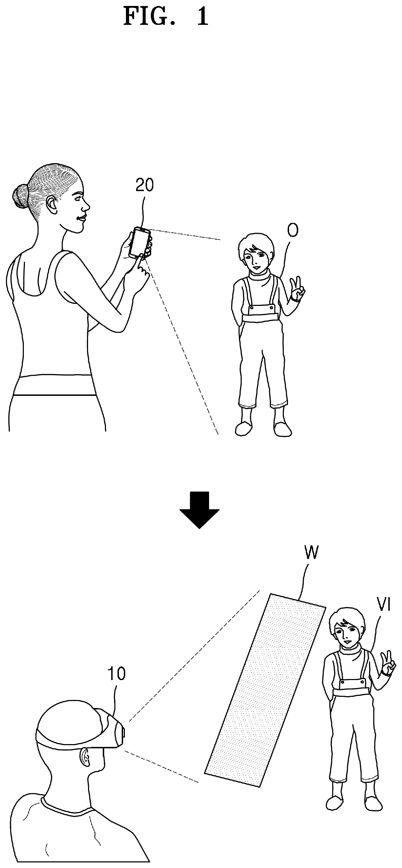

FIG. 1 is a diagram for describing a method by which an AR device 10 determines a location and angle of a viewing window W for displaying a virtual image VI corresponding to image data, and outputs the virtual image VI based thereon, according to an embodiment of the present disclosure.

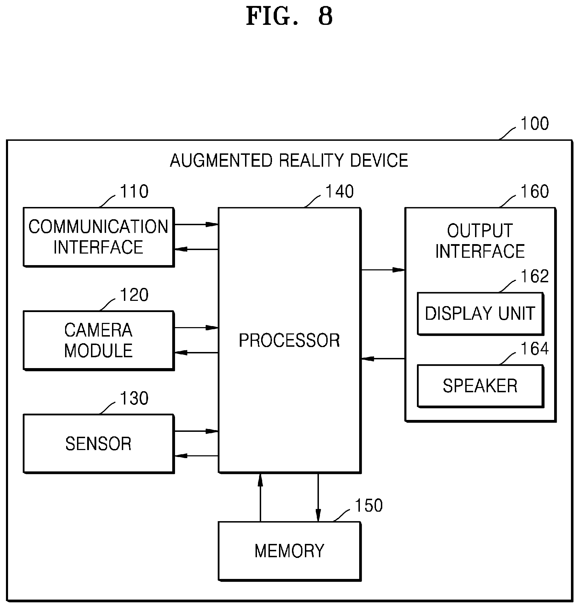

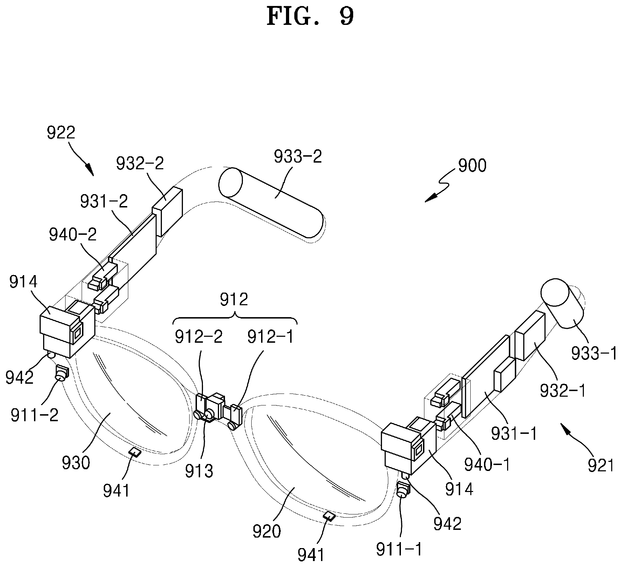

The AR device 10 is a device capable of expressing augmented reality and may include, for example, AR glasses of a glasses-type that the user wears on his or her facial area. Elements of the AR device are described in greater detail with reference to FIGS. 8 and 9 described below.

In an embodiment, the AR device 10 may output, as a virtual image, an image captured by an image capture device 20. The image capture device 20 may include, as an external device, various devices capable of capturing images, such as a camera, a smartphone, or a tablet PC. The image capture device 20 may be a camera included in a separate electronic device that is different from the AR device 10. In an embodiment, the image capture device 20 may be included in the AR device 10. For example, the AR device 10 may display an image captured by an embedded camera module as a subsequent virtual image. A subject O may be included in an image captured by the image capture device 20. The image of the subject O may be displayed on the AR device 10 in the form of the virtual image VI.

In the present disclosure, the "viewing window W" may indicate an area of a display area of the AR device 10 in which captured image data is output.

In a virtual reality (VR) or AR device, when a captured image is viewed through an image capture device (camera module embedded in the VR or AR device or an external camera module included in a separate image capture device), it may be considered that a screen (e.g., the viewing window W having a three-dimensional spatial angle of 0 degrees) may be arranged straight ahead of the user's field of view to reproduce the image. In this case, when the captured image is captured at a different angle from the viewing field of the user wearing the device, the image may be seen as tilted due to the difference between a gaze direction of the user viewing the image and a direction in which the image has been captured. The tilt caused by the difference in the user's gaze direction and the capture direction causes the user to feel a sense of difference even more severely when viewing a three-dimensional image.

In an embodiment, movement of the image capture device 20 may occur while an image is being captured. In this case, when the image is reproduced by arranging a fixed screen (e.g., the viewing window W having a three-dimensional spatial angle of 0 degrees) straight head of the user's field of view, dizziness may be caused in the user viewing the image.

In an embodiment of the present disclosure, the AR device 10 may determine an area in which a captured image is reproduced (e.g., the viewing window W) based on a pose of the image capture device 20 at the moment of capture, so that a direction of capture at the time when the image capture device 20 captures an image matches a view direction in which the user views the image. For example, the AR device 10 may determine a location and angle (an angle at which the image is projected through the viewing window) on a display of the viewing window W, which is an area in which image data is reproduced, based on the pose of the image capture device at the time of image capture.

The AR device 10 may obtain image data. When the image data is captured by the external image capture device 20, the AR device 10 may receive the image data from the external image capture device 20. When the image data is captured through a camera module embedded in the AR device 10, the AR device 10 may access the image data in an internal memory of the AR device 10.

Thereafter, in order to output the obtained image data through the viewing window W, the AR device 10 may obtain pose information of the image capture device 20 (a built-in camera (camera module) or an external device including a camera) at the time of capture of the image data. The pose information of the image capture device 20 may include at least one of height information of the image capture device 20 relative to the ground, height information of the image capture device 20 relative to the subject O, or three-dimensional spatial angle information of the image capture device 20. The three-dimensional spatial angle information may indicate a yaw value, a pitch value, and a roll value of the capture direction of the image capture device 20, and may be expressed, for example, as an Euler angle or a quaternion.

In an embodiment, the operation of obtaining pose information of the image capture device 20 by the AR device 10 may be to receive, from the external image capture device 20, pose information at the time when image data is captured. For example, the external image capture device 20 including a camera for capturing images may include at least one of an inertial measurement unit (IMU) or a depth camera, in addition to the camera. The image capture device 20 including a camera may obtain, through a sensor, pose information of the camera at the time of capture, and transmit the obtained pose information to the AR device 10. The pose information may be transmitted to the AR device 10 in the form of metadata together with the image data, or may be transmitted to the AR device 10 through a separate message.

When the image data is captured through a camera module embedded in the AR device 10, the AR device 10 may access pose information at the time of capturing the image data in internal memory. The pose information may be stored in the memory in the form of metadata together with the image data.

In an embodiment, the operation of obtaining pose information of the image capture device 20 by the AR device 10 may be that the AR device 10 directly calculates pose information based on at least one of the obtained image data or sensor information received from the external image capture device 20.

For example, the AR device 10 may perform image analysis on the obtained image data and calculate pose information of the image capture device 20 that has captured the corresponding image data. In this case, the AR device 10 may obtain a depth map corresponding to the image data, and obtain, based on the depth map, a height of the image capture device 20 relative to the ground and an angle of the image capture device 20 on a three-dimensional space at the time of capturing the image data.

For example, the AR device 10 may receive sensor information of at least one of the IMU or a depth sensor from the image capture device 20, and calculate, by using the received sensor information, pose information of the image capture device 20 that has captured the corresponding image data. The sensor information may be received in the form of metadata together with the image data from the image capture device 20, or may be received through a message separate from the image data.

The AR device 10 may determine, based on the pose information of the image capture device 20, a location and angle of a viewing window in which a virtual image corresponding to the image data is displayed. In an embodiment, the location and angle of the viewing window may be determined such that the capture direction of the image capture device 20 at the time when the corresponding image data is captured and the gaze direction (viewing direction) of the user viewing the virtual image displayed on the viewing window correspond to each other. The capture direction of the image capture device 20 may indicate a central direction of a field of view (FOV) of a camera module for capturing images, and the viewing direction of the user may indicate the gaze direction of the user viewing the image. In an embodiment, when a vertical direction (normal) of the viewing window W matches (or is opposite to) the capture direction of the camera module, the capture direction of the camera module and the viewing direction of the user may correspond to each other. When the viewing window is arranged to correspond to the capture direction of the camera module, a sense of difference between the reproduced content and the real world may be reduced.

In an embodiment, for the operation of determining the location and angle of the viewing window, pose information of the AR device 10 itself may be used in addition to the pose information of the image capture device 20. In an embodiment, the user wearing the AR device may not view straight ahead, or may move while viewing the reproduced image. In this case, in order for the capture direction of the image capture device 20 (or, camera module) to correspond to the viewing direction of the user viewing the screen that is reproduced through the viewing window, it is necessary to use not only the pose of the image capture device 20, but also head pose information of the user wearing the AR device 10.

In an embodiment, the AR device 10 may obtain motion information of the image capture device 20 corresponding to the image data, and change the location and angle of the viewing window based on the motion information of the image capture device 20. In an embodiment, the image capture device 20 may capture the image data while moving instead of being in a stopped state. The motion information of the image capture device 20 may include information about a pose change of the image capture device 20. By changing the location and angle of the viewing window based on the motion information, content (an object) included in the virtual image may be fixed on a spatial coordinate system. In addition, by changing the location and angle of the viewing window over time based on the motion information of the image capture device 20, while moving the viewing window, the virtual image may be reproduced in the same way as the motion of the image capture device 20 at the time when the image is captured, thereby providing the user with the vivid motion at the time when the image is captured.

In an embodiment, the operation of changing the location and angle of the viewing window by the AR device 10 based on motion information of the image capture device 20 may be performed for each frame of the corresponding virtual image.

The AR device 10 may output a viewing window in which the virtual image is displayed, based on the determined location and angle.

In an embodiment, the AR device 10 may output the viewing window on the display based on the determined location and angle of the viewing window, and render, in the output viewing window, a three-dimensional virtual image corresponding to the image data.

In an embodiment, the AR device 10 may allow the origin on the three-dimensional coordinate system of the three-dimensional virtual image output through the viewing window to correspond to the origin on the three-dimensional coordinate system of the real-world image provided to the user through an area outside the viewing window. For example, the image may be output such that the ground level of the virtual image displayed through the viewing window has the same height as the ground level of the real-world image displayed through the area outside the viewing window. The AR device 10 may allow a 3D scale of a three-dimensional virtual image rendered in the viewing window area to be the same as that of the real world (or, a 3D scale of the real-world image rendered in an area outside the viewing window) so that the vivid virtual image may be reproduced. Thus, a user viewing the virtual image may indirectly experience the camera motion at the time of image capture through the AR device 10.

As described above, according to an embodiment of the present disclosure, the position of the viewing window in which a corresponding virtual image is displayed on the basis of a pose of the image capture device 20 (or, camera module) at the time of image capture, thereby maximizing a sense of presence of the user when viewing the image. Thus, a sense of difference between the content and the real world may be lessened so that the dizziness may be alleviated in the user viewing the virtual image.

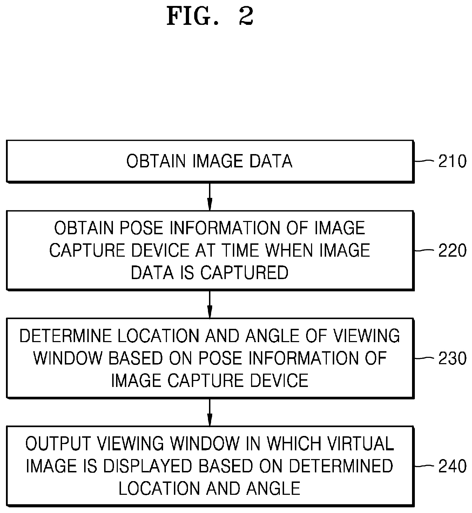

FIG. 2 is a flowchart of a method by which an AR device operates, according to an embodiment of the present disclosure.

In operation 210, the AR device may obtain image data. The image data may be captured by an image capture device. The image capture device may be configured as a separate electronic device that is different from the AR device, or may be a camera module embedded in the AR device.

In an embodiment, when the image data is captured by the separate image capture device, the AR device may receive the image data from the image capture device via wired or wireless communication. When the image data is captured through the camera module embedded in the AR device, the AR device may access image data stored in an internal memory and obtain the image data.

In operation 220, the AR device may obtain pose information of the image capture device at the time when the image data is captured. In an embodiment, the image capture device may not capture the image data while moving, not in a fixed state. When the image capture device captures the image data while moving, the AR device may obtain motion information of the image capture device at the time when the image data is captured. The motion information may include information about a pose change of the image capture device.

In order to output the obtained image data through the viewing window, the AR device may obtain the pose information of the image capture device (an internal camera module, a separate image capture device, or an external camera module) at the time when the image data is captured. At the time when the image data is captured, the pose information of the image capture device may include at least one of height information of the image capture device relative to the ground, height information of the image capture device relative to a specific subject, or three-dimensional spatial angle information of the image capture device. The three-dimensional spatial angle information may indicate a yaw value, a pitch value, and a roll value of the capture direction of the image capture device, and may be expressed as an Euler angle or a quaternion.

The pose information of the image capture device at the time when the image data is captured may be received from an external device, or may be directly calculated and obtained by the AR device. For example, the AR device may perform image analysis (e.g., calculate a depth map of the image) on the obtained image data and calculate pose information of the image capture device that has captured the corresponding image data.

For example, when the image data is captured through a separate image capture device (or, external camera module), the pose information of the image capture device at the time of capture may be received from another electronic device including the corresponding external camera module. The pose information may be received in the form of metadata together with the image data, or may be received through a separate message. Alternatively, the AR device may receive, from the other electronic device including the corresponding external camera module, information (e.g., an IMU information or depth sensor information) for calculating pose information such as sensor information, and then calculate pose information of the image capture device based on the received information and the image data. The information for calculating pose information may be received in the form of metadata together with the image data, or may be received through a separate message.

For example, when the image data is captured through the camera module embedded in the AR device, the AR device may access pose information in the internal memory at the time when the image data is captured, or calculate practice pose information of the camera based on the information for calculating pose information, such as sensor information, and the image data. The pose information or the information for calculating pose information may be stored in the form of metadata in a memory of the AR device together with the image data.

In operation 230, the AR device may determine a location and angle of a viewing window based on the pose information of the image capture device. The viewing window may indicate an area in which the image data is reproduced, i.e., an area on the display where a virtual image corresponding to the image data is displayed.

In an embodiment, the position and three-dimensional spatial angle of the viewing window may be determined such that the capture direction at the time when the image capture device captures an image corresponds to a gaze direction in which the user views the corresponding image through a virtual image. For example, the three-dimensional spatial angle of the viewing window may be determined such that a vertical direction (normal direction) of the viewing window corresponds to the capture direction of the image capture device. When the viewing window is arranged to correspond to the capture direction of the image capture device, a sense of difference between the captured content and the real world may be reduced.

In an embodiment, for the operation in which the AR device determines the location and angle of the viewing window, pose information of the AR device itself may be used in addition to the pose information of the camera. For example, when a user wearing the AR device is not looking straight ahead or moves while viewing the image, head pose information of the user wearing the AR device as well as a pose of the image capture device while capturing, so as to match the capture direction of the image capture device and the gaze direction of the user.

In an embodiment, the AR device may obtain motion information of the image capture device at the time when the image capture device, and change the location and angle of the viewing window over time based on the motion information of the image capture device. In an embodiment, the image capture device may not capture the image data while moving, not in a fixed state. The motion information of the image capture device may include information about a pose change of the image capture device. The AR device may change the location and angle of the viewing window based on the motion information, thereby fixing content (object) included in a virtual image on a spatial coordinate system. In addition, by changing the location and angle of the viewing window over time based on the motion information, while moving the viewing window, the virtual image may be reproduced in the same way as the motion of the image capture device at the time when the image is captured, thereby providing the user with the vivid motion at the time when the image is captured.

In an embodiment, the operation of changing the location and angle of the viewing window over time by the AR device over based on motion information of the image capture device may be performed for each frame of the corresponding virtual image.

In operation 240, the AR device outputs a viewing window in which the virtual image is displayed, based on the determined location and angle. The AR device may output the viewing window on the display based on the location and angle of the viewing window determined through operation 230, and render, in the output viewing window area, a three-dimensional virtual image corresponding to the image data obtained in operation 210. That is, the image data may be output through the viewing window.

In an embodiment, the AR device may allow the origin on the three-dimensional coordinate system of the three-dimensional virtual image output through the viewing window to correspond to the origin on the three-dimensional coordinate system of the real-world image provided to the user through an area outside the viewing window. For example, the image may be output such that the ground level of the virtual image displayed through the viewing window has the same height as the ground level of the real-world image displayed through the area outside the viewing window. The operation of matching the origin, on the three-dimensional coordinate system, of the image data output through the viewing window with the origin, on the three-dimensional coordinate system, of a real-world image provided to the user through a display area outside the viewing window is described below in greater detail with reference to FIG. 16.

The AR device may allow a 3D scale of a three-dimensional virtual image rendered in the viewing window area on the display to be the same as that of the real world (or, a 3D scale of the real-world image rendered in an area outside the viewing window) so that the vivid virtual image may be reproduced. Thus, a user viewing the image data may indirectly experience the motion of the image capture device at the time when the image data is captured, through the AR device.

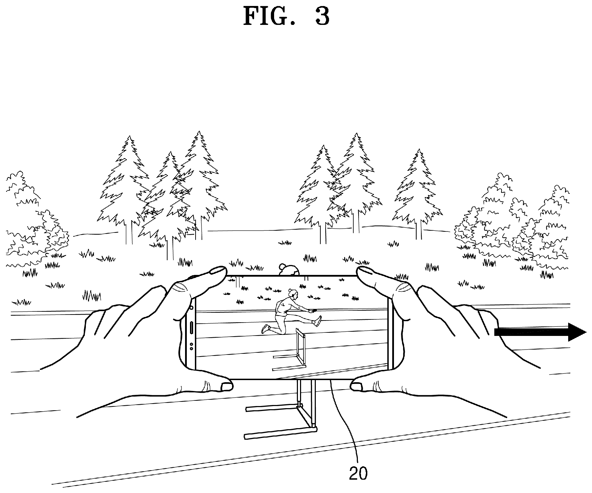

FIG. 3 is a diagram for describing an operation of capturing image data through the image capture device 20, according to an embodiment of the present disclosure.

In an embodiment, image data may be captured by the image capture device 20. An image captured by the image capture device 20 may be a two-dimensional or three-dimensional image. The image capture device 20 may capture the image data while moving instead of being in a stopped state.

The image capture device 20 may calculate pose information of the image capture device 20 at the time when the image data is captured. The pose information of the image capture device 20 may include at least one of height information of the image capture device 20 relative to the ground, height information of the image capture device 20 relative to the subject, or three-dimensional spatial angle information of the image capture device 20. The three-dimensional spatial angle information may indicate a yaw value, a pitch value, and a roll value of the capture direction of the image capture device 20, and may be expressed, for example, as an Euler angle or a quaternion.

When the image capture device 20 captures the image data while moving instead of being in a stopped state, motion information of the image capture device 20 may include information about a change in pose of the image capture device 20. For example, the motion information may indicate a change in pose information of the image capture device 20 in units of frames of a virtual image of the image capture device 20.

An electronic device including a camera module may include an inertial sensor (e.g. inertial measurement unit, IMU) or a depth sensor (e.g. depth camera) in addition to a camera. The electronic device including a camera module may obtain, through the sensor, pose information (or, motion information) of the camera module at the time of capture. The pose information of the camera module may be calculated based on at least one of image data or sensor information. For example, the electronic device including a camera module may perform image analysis on the captured image data and obtain pose information of the camera module that captured the corresponding image data. In this case, the electronic device may obtain a depth map corresponding to the image data, and obtain, based on the depth map, a height of the image capture device 20 relative to the ground and an angle of the camera module on a three-dimensional space at the time of capturing the image data.

The pose information (or, motion information) of the camera module may be stored in the form of metadata in a memory of the electronic device together with the image data.

In the case where movement of the image capture device 20 occurs while an image is being captured, when the image is reproduced by arranging a fixed screen (e.g., the viewing window W having a three-dimensional spatial angle of 0 degrees) straight ahead of the user's field of view, dizziness may be caused in the user viewing the image. Accordingly, when there is a movement of the image capture device 20 while image data is captured, an AR device may reproduce the corresponding image data by considering the movement of the image capture device 20, thereby reproducing a virtual image by moving the viewing window in the same way as the motion of the image capture device 20 at the time of image capture. Thus, the motion at the time of image capture may be vividly provided to the user.

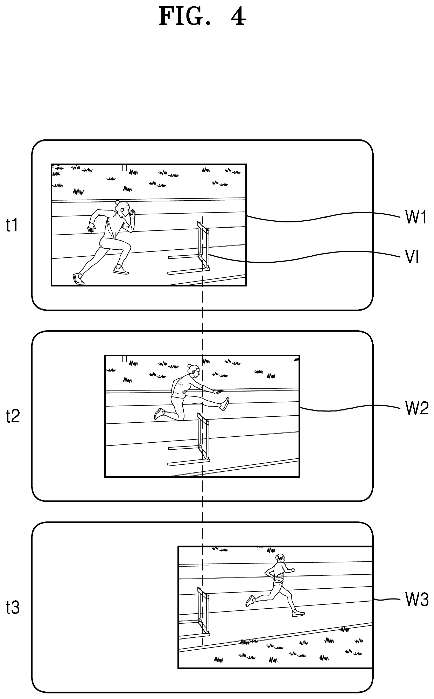

FIG. 4 is a diagram for describing an operation of outputting a virtual image through viewing windows W1, W2, and W3 when a user wearing an augmented reality device fixes his or her gaze straight ahead, according to an embodiment of the present disclosure.

FIG. 4 shows an example in which an AR device reproduces an image captured in FIG. 3 described above. FIG. 4 shows a case where a user wearing the AR device does not move his or her gaze but fixes it to straight ahead. Referring to FIG. 4, the viewing windows W1, W2, and W3 for reproducing an image may be displayed in a partial area on a display of the AR device.

The AR device may obtain motion information of a camera module (e.g., a camera module embedded in the AR device or an external camera module included in a separate image capture device) corresponding to image data, and change locations and angles of the viewing windows W1, W2, and W3 based on the motion information of the camera module. When the device including a camera module captures image data while moving instead of being in a stopped state, the motion information of the camera module may include information about a change in pose of the camera module over time. By changing the locations and angles of the viewing windows W1, W2, and W3 based on the motion information of the camera module, static content (object VI) included in a virtual image may be fixed on a spatial coordinate system. In addition, by changing the locations and angles of the viewing windows W1, W2, and W3 based on the motion information of the camera module, a virtual image may be reproduced by moving the viewing windows W1, W2, and W3 in the same way as the camera motion at the time of capture of the image, thereby vividly providing the user with the motion at the time of image capture.

Referring to FIG. 4, a location and angle of a viewing window in which image data is displayed may change over time based on the motion information of the camera module corresponding to the image data. For example, in FIG. 3, when the image capture device 20 moves from left to right along the object running the hurdles, in a process of outputting captured image data, at time t1, the viewing window W1 may be located on the left of the display of the AR device, at time t2, the viewing window W2 may be located in the middle of the display of the AR device, and at time t3, the viewing window W3 may be located on the right of the display of the AR device.

According to an embodiment of the present disclosure, a dynamic object within an image from the time when the image is captured is displayed to dynamically move even in the image data reproduced through the AR device, but a fixed (static) object within the image may be expressed as fixed even in the image data reproduced through the AR device. For example, when an image of a person running the hurdles is reproduced through the AR device, during an actual capture process, a static object, e.g., the hurdle VI fixed to the floor, may also be fixed on a spatial coordinate system even within the virtual image being reproduced.

That is, in the image captured in FIG. 3, because the image capture device 20 has moved when the image is captured, a location of the hurdle VI may be dynamically expressed in the image data itself in which the FOV area of the camera module is captured. Based on the capture direction of the camera module, the hurdle VI may be considered to be dynamic. However, when an image is reproduced in the AR device, the viewing windows W1, W2, and W3 on which an image is displayed are moved based on the motion information of the camera module, thereby expressing a static object (hurdle VI) as if the static object were actually fixed on the spatial coordinate system. In the embodiment of FIG. 4, because the gaze of the user wearing the AR device is fixed to the front (because a pose of the AR device is fixed on the spatial coordinate system), an actual static object (hurdle VI, lane line, grass, etc.) may be expressed on the display as if the static object were fixed.

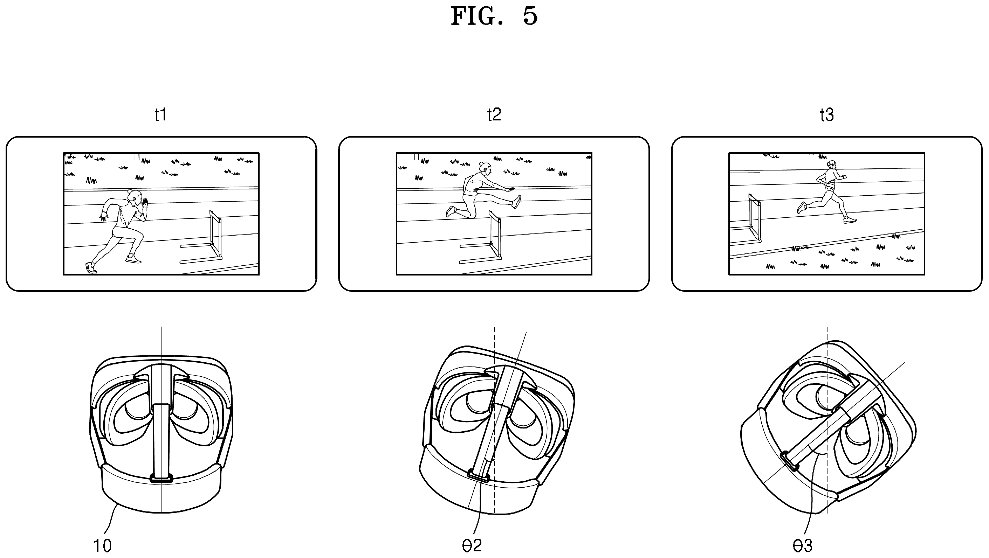

FIG. 5 is a diagram for describing an operation of outputting a virtual image through a viewing window when a user wearing the AR device 10 moves his or her gaze, according to an embodiment of the present disclosure.

FIG. 5 shows an example in which the AR device 10 reproduces the image captured in FIG. 3 described above. FIG. 5 shows a case where the user wearing the AR device 10 moves his or her gaze along a dynamic object in the image. A change in gaze direction of the user wearing the AR device 10 may be indicated as a pose change of the AR device 10. Referring to FIG. 5, a viewing window for reproducing an image may be displayed in a partial area on the display of the AR device 10.

The AR device 10 may obtain motion information of a camera module (a camera module embedded in the AR device or an external camera module included in a separate image capture device) corresponding to image data, and change a location and angle of the viewing window based on the motion information of the camera module and pose information of the AR device 10. When the device including a camera module captures image data while moving instead of being in a stopped state, the motion information of the camera module may include information about a change in pose of the camera module over time. By changing the location and angle of the viewing window based on the motion information of the camera module and the pose information of the AR device 10, static content included in a virtual image may be fixed on the spatial coordinate system.

When the location and angle of the viewing window is determined based on the motion information of the camera module, the virtual image may be reproduced by reflecting the camera motion at the time when the image is captured, and when the location and angle of the viewing window is determined based on the pose information of the AR device 10, a more vivid virtual image may be provided to the user.

Referring to FIG. 5, the location and angle of the viewing window in which image data is displayed may be changed over time based on the motion information of the camera module corresponding to the image data and the pose information of the AR device 10.

For example, in FIG. 3, when an image is captured, the image capture device 20 may move from left to right along the object running the hurdles. Referring to FIG. 5, in a process of outputting the captured image data, at time t1, the gaze direction of the user wearing the AR device 10 may face forward (θ1=0), at time t2, the gaze direction of the user wearing the AR device 10 may face right (θ2) rather than forward, and at time t3, the gaze direction of the user wearing the AR device 10 may face further to the right (θ3).

Referring to FIG. 5, the user's gaze moves to the right over time, but the location of the viewing window in which the image data is output on the display may not be changed. In this case, it may be indicated a case where a change in gaze direction of the user over time corresponds to the movement of capture direction of the camera module at the time when the image data is captured. For example, the capture direction of the camera module at the start time point (t1=0) of the image data may be the front, the capture direction of the camera module at the time point (t2-t1) may be θ2, and the capture direction of the camera module at the time point (t3-t1) may be θ3. In other words, when the user wearing the AR device 10 moves his or her gaze in the same direction and speed as the movement of the camera module, the viewing window outputting the image data may be viewed as fixed to the front of the display.

According to an embodiment of the present disclosure, a dynamic object within an image from the time when the image is captured is displayed to dynamically move even in the image data reproduced through the AR device, but a fixed (static) object within the image may be expressed as fixed even in the image data reproduced through the AR device. For example, when an image of a person running the hurdles is reproduced through the AR device, during an actual capture process, a static object, e.g., the hurdle VI fixed to the floor, may also be fixed on a spatial coordinate system even within the virtual image being reproduced.

That is, in the image captured in FIG. 3, because the image capture device moved when the image is captured, the location of the hurdle VI may be dynamically expressed in the image data itself where the FOV area of the camera module is captured. When the AR device 10 reproduces an image, when the user viewing the image moves his or her gaze according to "a person running the hurdles" in the image (when the user's gaze moves in the same direction as the capture direction of the image capture device), the viewing window may be fixed at the center on the display, and the captured image data may be viewed as it is.

In an embodiment, when the viewing window in which an image is displayed is moved based on the motion information of the camera module, a static object may be expressed as if the static object were actually fixed on the spatial coordinate system. For example, the actual static object (hurdle, lane line, grass, etc.) may be expressed as if the static object were fixed on the spatial coordinate system. In addition, the viewing window in which the image is displayed may be moved based on the pose information of the AR device 10, thereby providing a more vivid virtual image to the user. In the embodiment of FIG. 5, as the user wearing the AR device 10 changes his or her gaze, the position of the viewing window is changed, thereby expressing a "virtual space" in the image data as if the virtual space were viewed through the viewing window.

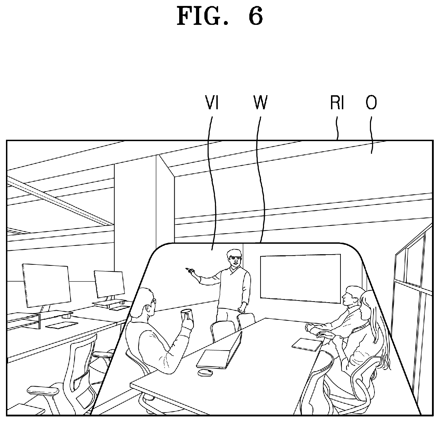

FIG. 6 is a diagram for describing an operation by which an augmented reality device determines a location and angle of the viewing window W, according to an embodiment of the present disclosure.

When a pre-captured image is viewed through an image capture device (a camera module embedded in the VR or AR device or an external camera module included in a separate image capture device) in a VR or AR device, it may be considered to reproduce the image by arranging a screen (e.g., the viewing window W having a three-dimensional spatial angle of 0 degrees) in front of the user's field of view. In this case, when the captured image is captured at a different angle from the viewing field of the user wearing the device, the image may be seen as tilted due to the difference between a gaze direction of the user viewing the image and a direction in which the image has been captured. The tilt caused by the difference in the user's gaze direction and the capture direction causes the user to feel a sense of difference even more severely when viewing a three-dimensional image.

In an AR device according to an embodiment of the present disclosure, an on-display location and an image projection angle of the viewing window W, which is an area on which image data is reproduced, may be determined based on the pose of the image capture device at the time when the image is captured, so that the capture direction at the time when the image capture device captures image data corresponds to the field-of-view direction in which the user views the corresponding image. In an embodiment, in determining the on-display location and angle of the viewing window W, pose information of the AR device may be further considered.

In an embodiment, the AR device may allow the origin on the three-dimensional coordinate system of the three-dimensional virtual image VI output through the viewing window W to correspond to the origin on the three-dimensional coordinate system of a real-world image RI provided to the user through an area outside the viewing window W. For example, the image may be output such that the ground level of the image VI displayed through the viewing window W has the same height as the ground level of the real-world image RI displayed through the area outside the viewing window W.

For example, referring to FIG. 6, at least one of on-display location or the three-dimensional spatial angle of the viewing window W may be determined such that a desk surface included in the real-world image RI has the same angle as and is parallel to a desk surface included in the three-dimensional virtual image VI projected and displayed on the viewing window W. An image analysis technique for image data may be used for an operation of determining angles and levels of a desk surface in the real-world image RI and a desk surface in the three-dimensional virtual image VI. In the image analysis technique, a depth map may be obtained from image data, and object recognition and information about an object may be obtained based on the depth map.

The AR device may allow a 3D scale of a three-dimensional virtual image VI rendered in the viewing window W area to be the same as that of the real world (or, a 3D scale of the real-world image RI rendered in an area outside the viewing window W) so that the vivid virtual image may be reproduced. Thus, a user viewing the virtual image VI may indirectly experience the motion of the image capture device at the time when the image VI is captured, through the AR device.

As described above, according to an embodiment of the present disclosure, the location or three-dimensional spatial angle of the virtual image VI on which the corresponding virtual image VI is displayed may be adjusted based on the pose of the image capture device at the time when the image is captured and the pose information of the AR device, a sense of presence of the user may be maximized when viewing the image, and a sense of difference between the content and the real world may be reduced, thereby alleviating dizziness in the user viewing the virtual image.

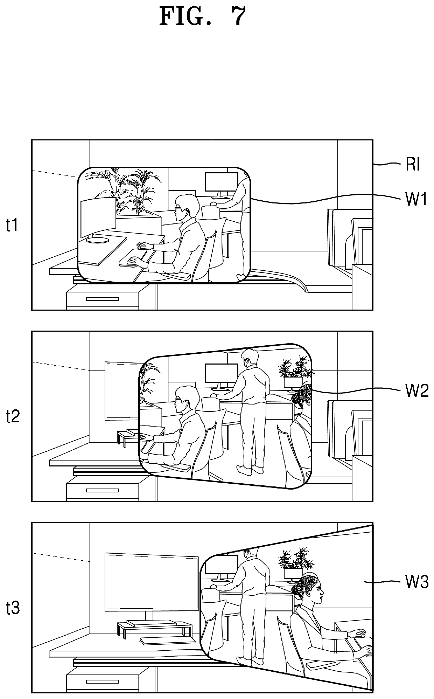

FIG. 7 is a diagram for describing an operation by which an augmented reality device changes locations and angles of the viewing windows W1, W2, and W3 based on motion information of an image capture device, according to an embodiment of the present disclosure.

FIG. 7 shows a case where a user wearing the AR device does not move his or her gaze but fixes it to the front. Referring to FIG. 7, the viewing windows W1, W2, and W3 for reproducing an image may be displayed in a partial area on a display of the AR device.

The AR device may obtain motion information of an image capture device corresponding to image data, and change locations and angles of the viewing windows W1, W2, and W3 based on the motion information of the image capture device. When the image capture device captures the image data while moving rather than in a stopped state, the motion information of the image capture device may include information about a change in the pose of the image capture device over time. When the locations and angles of the viewing windows W1, W2, and W3 are changed based on the motion information of the image capture device, static content included in a virtual image may be fixed on the spatial coordinate system. In addition, when the locations and angles of the viewing windows W1, W2, and W3 are changed based on the motion information of the image capture device, the virtual image may be, while moving, reproduced as the motion itself of the image capture device at the time when the image is captured, thereby providing the user with the vivid motion at the time of the image is captured.

Referring to FIG. 7, the locations and angles of the viewing windows W1, W2, and W3 on which the image data is displayed may be changed over time t1, t2, and t3 based on the motion information of the image capture device corresponding to the image data. For example, the image data displayed through the viewing windows W1, W2, and W3 may be a panoramic image captured while moving from left to right in the office. In a process of outputting the image data, at time t1, the viewing window W1 may be located to the left of the center on the display of the AR device, at time t2, the viewing window W2 may be located to the right of the center on the display of the AR device, and at time t3, the viewing window W3 may be located further to the right on the display of the AR device.

According to an embodiment of the present disclosure, a fixed (static) object in the image from the image data is captured may also be expressed as fixed in the image data reproduced through the AR device. For example, when a panoramic image of the office is reproduced through the AR device, a static object (e.g., a desk, a flowerpot, a computer, etc.) during an actual capture process may also be fixed on the spatial coordinate system even in the reproduced virtual image.

In addition, the origin on the three-dimensional coordinate system of the three-dimensional virtual image output through the viewing windows W1, W2, and W3 may correspond to the origin on the three-dimensional coordinate system of the real-world image RI provided to the user through an area outside the viewing windows W1, W2, and W3.

For example, referring to FIG. 7, at least one of the on-display locations or the three-dimensional spatial angles of the viewing windows W1, W2, and W3 may be determined such that a desk surface included in the real-world image RI has the same angle and is parallel to a desk surface of at least one of the three-dimensional virtual image projected onto and displayed on the viewing windows W1, W2, and W3. The operation of determining an angle and level of a desk surface of the real-world image RI and a desk surface of the three-dimensional virtual image may utilize an image analysis technique for image data. In the image analysis technique, a depth map may be obtained from image data, and object recognition and information about an object may be obtained based on the depth map.

The AR device may allow a 3D scale of the three-dimensional virtual image rendered in the viewing windows W1, W2, and W3 to be equal to a real scale (or, 3D scale of the real-world image RI rendered in an area outside the viewing windows W1, W2, and W3), thereby reproducing a vivid virtual image.

That is, when an image captured by a moving image capture device is reproduced in the AR device, the viewing windows W1, W2, and W3 on which the image is displayed may be moved based on motion information of the image capture device so that a static object may be expressed as if the static object were actually fixed on the spatial coordinate system. In the embodiment of FIG. 7, because the gaze of a user wearing the AR device is fixed to the front (because the pose of the AR device is fixed on the spatial coordinate system), the static objects may be expressed as actually fixed on the display.

FIG. 8 is a block diagram of the AR device 10 according to an embodiment of the present disclosure.

Referring to FIG. 8, the AR device 10 may include a communication interface 110, a camera module 120, a sensor 130, a processor 140, memory 150, and an output interface 160. Each of the communication interface 110, the camera module 120, the sensor 130, the processor 140, the memory 150, and the output interface 160 may be electrically and/or physically connected to each other. Meanwhile, elements of the AR device 10 are not limited to those shown in FIG. 8. The AR device 10 may be implemented by more elements than those shown in FIG. 8, or the AR device 10 may be implemented by fewer elements than those shown in FIG. 8.

In an embodiment of the present disclosure, the AR device 10 may be implemented as AR glasses worn on the user's head, in which case the AR device 10 may further include a power supply unit (e.g., a battery) which supplies driving power, in addition to the communication interface 110, the camera module 120, the sensor 130, the processor 140, and the output interface 160. In an embodiment, the AR device 10 may not include a speaker 164.

The communication interface 110 may be configured to transmit and receive data to and from a server or an external device (e.g., a device of interest) through a wired or wireless communication network. For example, the communication interface 110 may perform data communication with the server or the external device by using at least one of data communication schemes, including wired LAN, wireless LAN, Wi-Fi, Bluetooth, Zigbee, Wi-Fi Direct (WFD), infrared Data Association (IrDA), Bluetooth Low Energy (BLE), Near Field Communication (NFC), Wireless Broadband Internet (Wibro), World Interoperability for Microwave Access (WiMAX), Shared Wireless Access Protocol (SWAP), Wireless Gigabit Alliance (WiGig), and RF communication. However, the disclosure is not limited thereto, and when the AR device 10 is implemented as a wearable device such as smart glasses, the communication interface 110 may transmit and receive data to and from the server or the external device through a network in accordance to a mobile communication standard such as a communication scheme using CDMA, WCDMA, 3G, 4G (LTE), 5G Sub6, and/or millimeter wave (mmWave).

In an embodiment, the communication interface 110 may be connected to at least one external object (e.g., a separate image capture device) through a short-range communication scheme such as Bluetooth or WFD, and may transmit and receive various information to and from the external object.

The camera module 120 may be configured to obtain two-dimensional (2D) or three-dimensional (3D) image data by photographing a real space. The camera module 120 may be implemented as a small form factor so as to be mounted on the AR device 10, and may be a lightweight RGB camera which consumes low power. However, the disclosure is not limited thereto, and in an embodiment of the present disclosure, the camera module 120 may be implemented as a camera of any known type, such as a RFB-depth camera including a depth estimation function, a dynamic vision sensor camera, a stereo fisheye camera, a grayscale camera, or an infrared camera, etc. In an embodiment, the AR device 10 may include a plurality of camera modules 120, and at least some of the plurality of camera modules 120 may be arranged in a direction toward the user and configured to photograph the user's face.

The camera module 120 may include a lens module, an image sensor, and an image processing module. The camera module 120 may obtain a still image or a video related to a real-world scene by means of an image sensor (e.g., CMOS or CCD). The video may include a plurality of image frames that are obtained in real time by photographing a real-world area through the camera module 120. The image processing module may encode a still image including a single image frame or video data including a plurality of image frames, which are obtained through the image sensor, and transfer same to the processor 140.

The capture of an image of a real-world scene according to an embodiment of the present disclosure may include an operation of controlling, by the AR device 10, the camera module (e.g., a camera including an image sensor and a lens) 120 provided in the AR device 10 to obtain an image by converting an optical image formed through a lens into an electrical signal. For example, the one or more processors 140 may control the camera module 120 provided in the AR device 10 to photograph the surroundings of the AR device 10 and obtain an image (e.g., a captured image) including one or more frames. Here, the image may include a live-view image.

The sensor 130 may include sensors configured to detect a real-world space, a location, context, or user information. In an embodiment of the present disclosure, the sensor 130 may include a gaze tracking sensor, an IMU, a global positioning system (GPS) sensor, a BLE sensor, an Ultra Wide Broadband (UWB) sensor, or other sensors capable of sensing various signals, but is not limited thereto.

The processor 140 may execute one or more instructions stored in the memory 150. The processor 140 may include a hardware element which performs calculation, logic, input/output operation, and image processing. In FIG. 8, the processor 140 is a single processor. However, the disclosure is not limited thereto, and the processor 140 may include one or more elements. The processor 140 may be a generic-purpose processor, such as a central processing unit (CPU), an application processor (AP), a digital signal processor (DSP), etc., a dedicated graphics processor such as a graphics processing unit (GPU) or a vision processing unit (VPU), or an dedicated Al processor such as a neural processing unit (NPU). The processor 140 may control input data to be processed according to predefined operation rules or an Al model. Alternatively, when the processor 140 is dedicated Al processors, the dedicated Al processor may be designed in a hardware structure specialized for processing a specific a model.

For example, the memory 150 may be configured as a storage medium of at least one type among flash memory type, a hard disk type, multimedia card micro type, card-type memory (e.g., SD or XD memory, etc.), random access memory (RAM), static random access memory (SRAM), read-only memory (ROM), electrically erasable programmable read-only memory (EEPROM), programmable read-only memory (PROM), or an optical disk.

The memory 150 may store instructions related to functions and/or operations for the AR device 10 to operate. In an embodiment, the memory 150 may store at least one of instructions readable by the processor 140, an algorithm, a data structure, a program code, and an application program. The instructions, the algorithm, the data structure, and the program code stored in the memory 150 may be implemented in a programming or scripting language, such as C, C++, Java, assembler, etc.

The processor 140 may execute the instructions or the program codes stored in the memory 150 and control overall operations of the AR device 10. The processor 140 may perform operations according to an embodiment of the present disclosure. For example, the processor 140 may execute programs stored in the memory 150 to perform comprehensive control on the communication interface 110, the camera module 120, the sensor 130, and the output interface 160.

The processor 140 may include a hardware element which performs calculation, logic, input/output operation, and signal processing. For example, the processor 140 may include at least one of a CPU, a microprocessor, a GPU, Application Specific Integrated Circuits (ASICs), DSPs, Digital Signal Processing Devices (DSPDs), Programmable Logic Devices (PLDs), and Field Programmable Gate Arrays (FPGAs), but is not limited thereto.

In an embodiment, the processor 140 may execute one or more instructions stored in the memory 150 to obtain image data captured by an image capture device (e.g., the camera module 120 embedded in the AR device 10 or an external camera module included in a separate image capture device), obtain pose information of the image capture device at the time when the corresponding image data is captured, determine, based on the pose information of the image capture device, a location and angle of a viewing window in which a virtual image corresponding to the image data is displayed, and output the viewing window in which the virtual image is displayed, based on the determined location and angle.

The output interface 160 may be configured under the control by the processor 140 to output image data captured by the image capture device as an AR image (virtual image) through a viewing window, or output an audio signal. The output interface 160 may include a display unit 162 and the speaker 164.

For example, the display unit 162 may be configured as at least one of, for example, a liquid crystal display, a thin film transistor-liquid crystal display, an organic light-emitting diode, a flexible display, a 3D display, or an electrophoretic display.

In an embodiment, when the AR device 10 is configured as AR glasses, the display unit 162 may be configured as a lens optical system, and may include a waveguide and an optical engine. The optical engine may generate light of an AR image including a text, an icon, or a virtual image, and may include a projector which projects light onto the waveguide. The optical engine may include, for example, an image panel, an illumination optical system, a projection optical system, etc. In an embodiment, the optical engine may be arranged in a frame or arms of the AR glasses.

The speaker 164 may be configured to output an audio signal. In an embodiment, the speaker 164 may output a voice message or an notification sound, under the control by the processor 140.

FIG. 9 is a diagram illustrating an AR device 900 of a glasses type, according to an embodiment of the present disclosure.

Referring to FIG. 9, the AR device 900 capable of outputting, as a virtual image, image data captured through an image capture device is shown. The AR device 900 is a device capable of providing AR-related services and may generally include AR glasses having a glasses shape, which the user wears on his or her face part, a head mounted display (HMD) worn on the head part, a virtual reality headset (VRH), or an AR helmet, etc. In HMDs, a display is arranged in front of user's eyes to provide a ultra-large screen to the user, and because the screen moves according to a user's movement, a realistic virtual world may be provided.

In an embodiment, the user may wear the AR device 900 capable of displaying visual extended reality content. The AR device 900 may include an audio module capable of providing the user with audio extended reality content. In an embodiment, the AR device 900 may include one or more cameras capable of capturing an image or video of the environment. The AR device 900 may include an eye tracking system to determine a vergence distance of the user. In an embodiment, the AR device 900 may include a lightweight HMD (e.g., goggles, glasses, visor, etc.). In an embodiment, the AR device 900 may include a device such as a lightweight portable display device or one or more laser projection glasses (e.g., glasses capable of projecting low-powered laser onto retina of the user so as to project and display an image or depth content to the user).

In an embodiment, the AR device 900 may provide an AR service for outputting at least one virtual object to overlap an area determined as the field of view (FOV) of the user. For example, the area determined as the FOV of the user is an area which the user wearing the AR device 900 may perceive through the AR device 900, and may be an area including all or at least some of the display of the AR device 900. In an embodiment, the AR device 900 may include a plurality of transparent members 920 and 930 respectively corresponding to both eyes of the user.

In an embodiment, the AR device 900 may include a display module 914, a camera, an audio output unit, and support portions 921 and 922.

The camera may capture an image corresponding to the user's FOV or measure a distance from an object. The camera may correspond to the camera module 120 in FIG. 8 described above. In an embodiment, the camera may be used for head tracking and spatial recognition. In addition, the camera may recognize a movement of the user.

In an embodiment, the camera may obtain an image corresponding to the user's FOV, i.e., a real-world scene image, or detect an object, or may further include an 'eye tracking (ET) camera 912' in addition to a camera 913 used for spatial recognition. In an embodiment, the ET camera 912 may be used for the purpose of detecting and tracking a user's pupil. The ET camera 912 may be used to adjust the center of a virtual image projected onto the AR device 900 to be located according to a direction in which the user's pupil gazes. For example, the ET camera 912 may use a global shutter (GS) camera to detect a pupil and track a fast pupil movement without delay. The ET camera 912 may additionally include a left-eye camera 912-1 and a right-eye camera 912-2.

In an embodiment, the display module 914 may include the first display 930 and the second display 920. The display module 914 may correspond to the display unit 162 in FIG. 8 described above. A virtual object output through the display module 914 may include a viewing window in which image data captured through an image capture device is displayed.

In an embodiment, the displays 920 and 930 may include a condenser lens or a waveguide in a transparent member. For example, the transparent member may be formed of a glass plate, a plastic plate, or a polymer, and may be manufactured to be completely transparent or translucent. In an embodiment, the transparent member may include the first transparent member 930 facing the right eye of the user wearing the AR device 900 and the second transparent member 920 facing the user's left eye. When the display is transparent, the display may be arranged at a position facing the user's eyes and may display a screen.

The waveguide may transfer light generated from a light source of the display to the user's eyes. For example, the waveguide may be at least partially positioned in a portion of the transparent members 920 and 930. According to an embodiment, light emitted from the displays may be incident to one end of the waveguide, and the incident light may be transferred to the user's eyes through total internal reflection within the waveguide. The waveguide may be manufactured from a transparent material, such as glass, plastic, or polymer, etc., and may include a nanopattern, e.g., a grating structure of a polygonal or curved shape, formed on an internal or external surface. In an embodiment, the incident light may be propagated or reflected inside the waveguide by the nanopattern and provided to the user's eyes. In an embodiment, the waveguide may include at least one of at least one diffractive element (e.g., a diffractive optical element (DOE), a holographic optical element (HOE)) or a reflective element (e.g., a mirror). In an embodiment, the waveguide may induce display light emitted from a light source portion to the user's eyes by using the at least one diffractive element or a reflective element.

In an embodiment, the displays 920 and 930 may include a display panel or a lens (e.g., glass). For example, the display panel may include a transparent material such as glass or plastic. In an embodiment, the display may include a transparent element, and the user may recognize an actual space at the rear of the display through the display. The display may display a virtual object, such as a viewing window, etc., in at least a partial area of the transparent element so that the virtual object is superimposed on at least a portion of a real-world space.

In an embodiment, the support portions 921 and 922 may include printed circuit boards (PCBs) 931-1 and 931-2 for transferring an electrical signal to each element of the AR device 900, speakers 932-1 and 932-2 for outputting an audio signal, or batteries 933-1 and 933-2 for power supply. The speakers 932-1 and 932-2 for outputting an audio signal may correspond to the speaker 164 in FIG. 8 described above. For example, in the AR device 900 of the glasses-type, the support portions 921 and 922 may be arranged in the arm portions. The support portions 921 and 922 may include hinge portions 940-1 and 940-2 for coupling to a main body portion of the AR device 900. The speakers 932-1 and 932-2 may include the first speaker 932-1 for transferring an audio signal to the user's left ear and the second speaker 932-2 for transferring an audio signal to the user's right ear.

Referring to FIG. 9, the AR device 900 may include a microphone 941 for receiving a user's speech and an ambient sound. In addition, the AR device 900 may include at least one illumination device (illumination LED) 942 so that the accuracy of at least one camera (e.g., the ET camera 912, the outward-facing camera 913, or the perception cameras 911-1 and 911-2) is increased. The illumination device 942 may be used as an auxiliary means for increasing accuracy when photographing a user's pupil, and the illumination device 942 may utilize an IR LED of an infrared wavelength rather than a visible light wavelength. For example, the illumination device 942 may be used as an auxiliary means when a user's gesture, etc. is photographed with the perception cameras 911-1 and 911-2 and it is not easy to detect a subject due to a dark environment.

According to an embodiment, the display module 914 may include a first light guide plate 930 corresponding to a right eye and a second light guide plate 920 corresponding to a left eye, and may provide visual information to the user by means of the first light guide plate 930 and the second light guide plate 920. According to an embodiment, the display module 914 may include a display panel and a lens (e.g., a glass lens, an LC lens). The display panel may include a transparent material such as glass or plastic.

According to an embodiment, the display module 914 may include a transparent element, and the user may recognize a real-world space at the rear of the display module 914 and in front of the user through the display module 914. The display module 914 may display a virtual object in at least a partial area of the transparent element so that the virtual object is superimposed on at least a portion of a real-world space.

In an embodiment, the AR device 900 may identify an external object included in at least a portion corresponding to an area determined as a user's FoV in image information related to a real-world space obtained through the outward-facing camera 913. The AR device 900 may obtain pose information of the AR device 900 based on the recognized external object. The AR device 900 may determine a location and angle at which a viewing window may be displayed, based on the pose information of the AR device 900. The external object may include an object present in the real-world space. According to various embodiments, a display area in which the AR device 900 displays a virtual object such as a viewing window, etc. may include a portion of the display module 914 (e.g., at least a portion of the display panel). According to an embodiment, the display area may be an area corresponding to at least a portion of the first light guide plate 930 and the second light guide plate 920.

According to an embodiment, the AR device 900 may measure, by using the outward-facing camera 913, a distance from a physical subject located in front of the AR device 900. The outward-facing camera 913 may include a high-resolution camera such as a high resolution (HR) camera and a photo video (PV) camera.

The AR device 900 according to an embodiment of the present disclosure is not limited to the configuration described above, and may include various numbers of various elements at various positions.

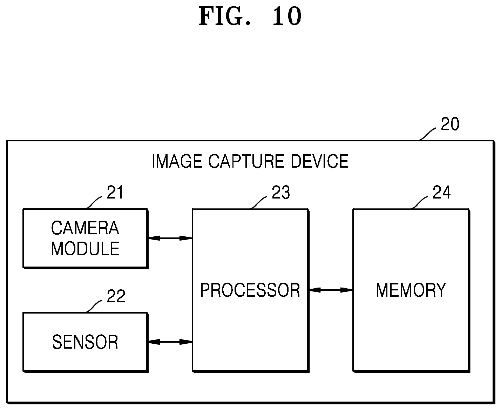

FIG. 10 is a block diagram of the image capture device 20 according to an embodiment of the present disclosure.

Referring to FIG. 10, the image capture device 20 may include a camera module 21, a sensor 22, a processor 23, and memory 24. Each of the camera module 21, the sensor 22, the processor 23, and the memory 24 may be electrically and/or physically connected to each other. Meanwhile, the elements of the image capture device 20 are not limited to those shown in FIG. 10. The image capture device 20 may be implemented by more elements than those shown in FIG. 10, or the image capture device 20 may be implemented by fewer elements than those shown in FIG. 10.

According to an embodiment of the present disclosure, the image capture device 20 may include various devices capable of capturing images, such as a camera, a smartphone, or a tablet PC. The image capture device 20 may further include a communication interface for communication with other electronic devices, or an internal output interface.

The camera module 21 may be configured to obtain 2D or 3D image data by photographing a real-world space. The camera module 21 may be implemented as a camera of various types, such as an RGB camera, an RGB-depth camera including a depth estimation function, a dynamic vision sensor camera, a stereo fisheye camera, a grayscale camera, or an infrared camera, etc. In an embodiment, the image capture device 20 may include a plurality of camera modules 21.

The camera module 21 may include a lens module, an image sensor, and an image processing module. The camera module 21 may obtain a still image or a video related to a real-world scene by means of an image sensor (e.g., CMOS or CCD). The video may include a plurality of image frames that are obtained in real time by photographing a real-world area through the camera module 21. The image processing module may encode a still image including a single image frame or video data including a plurality of image frames, which are obtained through the image sensor, and transfer same to the processor 23.

The capture of an image of a real-world scene according to an embodiment of the present disclosure may include an operation of controlling the camera module (e.g., a camera including an image sensor and a lens) 21 provided in the image capture device 20 to obtain an image by converting an optical image formed through a lens into an electrical signal. For example, the one or more processors 23 may control the camera module 21 provided in the image capture device 20 to photograph the surroundings of the image capture device 20 and obtain an image (e.g., a captured image) including one or more frames. Here, the image may include a live-view image.

The sensor 22 may include sensors configured to detect a real-world space, a location, context, or user information. In an embodiment of the present disclosure, the sensor 22 may include a gaze tracking sensor, an IMU, a GPS sensor, a BLE sensor, a UWB sensor, or other sensors capable of sensing various signals, but is not limited thereto.

The processor 23 may execute one or more instructions stored in the memory 24. The processor 23 may include a hardware element which performs calculation, logic, input/output operation, and image processing. In FIG. 10, the processor 23 is a single processor. However, the disclosure is not limited thereto, and the processor 23 may include one or more elements. The processor 23 may be a generic-purpose processor, such as a CPU, an AP, a DSP, etc., a dedicated graphics processor such as a GPU or a VPU, or an dedicated Al processor such as an NPU.

For example, the memory 24 may be configured as a storage medium of at least one type among flash memory type, a hard disk type, multimedia card micro type, card-type memory (e.g., SD or XD memory, etc.), RAM, SRAM, ROM, EEPROM, PROM, or an optical disk.

The memory 24 may store instructions related to functions and/or operations for the image capture device 20 to operate. In an embodiment, the memory 24 may store at least one of instructions readable by the processor 23, an algorithm, a data structure, a program code, and an application program. The instructions, the algorithm, the data structure, and the program code stored in the memory 24 may be implemented in a programming or scripting language, such as C, C++, Java, assembler, etc.

The processor 23 may execute the instructions or the program codes stored in the memory 24 and control overall operations of the image capture device 20. The processor 23 may perform operations according to an embodiment of the present disclosure. For example, the processor 23 may execute programs stored in the memory 24 to comprehensively control the camera module 21 and the sensor 22.

The processor 23 may include a hardware element which performs calculation, logic, input/output operation, and signal processing. For example, the processor 23 may include at least one of a CPU, a microprocessor, a GPU, ASICs, DSPs, DSPDs, PLDs, and FPGAs, but is not limited thereto.

In an embodiment, the processor 23 may execute one or more instructions stored in the memory 24 to obtain image data through the camera module 21, obtain, through the sensor, pose information of the image capture device 20 at the time when the image data is captured, and transmit the image data and the pose information of the image capture device 20 to an AR device.

The present disclosure provides a method by which an AR device outputs a virtual image. The method may include obtaining image data captured through an image capture device (a camera module embedded in the AR device or an external camera module included in a separate image capture device). The captured image may include a three-dimensional image. The method may include obtaining pose information of the corresponding image capture device (camera module) at the time when the image data is captured. The pose information of the image capture device at the time of capture may include a capture location and angle information of the image capture device at the time when the image data is generated. The method may include determining, based on the pose information of the image capture device, a location and angle of a viewing window in which a virtual image corresponding to the image data is displayed. The method may include outputting the viewing window in which the virtual image is displayed, based on the determined location and angle. According to the present disclosure, when the location and angle of the viewing window are determined by considering the pose information of the image capture device at the time when the image to be displayed through the viewing window is actually captured, an effect may be provided in which the user views the image at the same angle and height as the capture angle and height of the image capture device.

In an embodiment, the pose information of the image capture device may include height information of the image capture device at the time when the image data is captured and three-dimensional spatial angle information of the image capture device at the time when the image data is captured.

In an embodiment, the obtaining of the pose information of the image capture device may include receiving pose information from the image capture device.

In an embodiment, the obtaining of the pose information of the image capture device may include obtaining the pose information based on at least one of the image data or sensor information received from the image capture device.

In an embodiment, the obtaining of the pose information of the image capture device may include obtaining a depth information corresponding to image data, obtaining, based on the depth map, a height of the image capture device from the ground at the time when the image data is captured and an angle on the three-dimensional space, and obtaining pose information of the image capture device based on the height of the image capture device from the ground and the angle on the three-dimensional space.

In an embodiment, the method may include obtaining pose information of an AR device, and determining a location and angle of a viewing window based on the pose information of the AR device.

In an embodiment, the outputting of the viewing window in which the virtual image is displayed may include outputting a viewing window on a display based on the determined location and angle of the viewing window, and rendering a three-dimensional virtual image corresponding to image data to the output viewing window.

In an embodiment, the method may include obtaining motion information of the image capture device corresponding to the image data, and changing the location and angle of the viewing window based on the motion information of the image capture device.

In an embodiment, the motion information of the image capture device may include information about a change in pose of the image capture device.

In an embodiment, the changing of the location and angle of the viewing window based on the motion information of the image capture device may be performed for each frame of the corresponding virtual image.

The present disclosure provides an AR device which outputs an image captured through an image capture device (a camera module embedded in the AR device or an external camera module included in a separate image capture device) as a virtual image through the viewing window. The AR device may include a display unit, memory storing a program including at least one instruction, and at least one processor. The at least one processor may obtain image data captured through the image capture device, obtain pose information of the image capture device at the time when the image is captured, determine, based on the pose information of the image capture device, a location and angle of the viewing window in which the virtual image corresponding to the image data is displayed, and output a viewing window in which the virtual image is displayed based on the determined location and angle.

In an embodiment, the pose information of the image capture device may include height information of the image capture device at the time when the image data is captured and three-dimensional spatial angle information of the image capture device at the time when the image data is captured.

In an embodiment, the at least one processor may receive pose information from the image capture device.

In an embodiment, the at least one processor may obtain the pose information based on at least one of the image data or sensor information received from the image capture device.

In an embodiment, the at least one processor may obtain a depth map corresponding to the image data, obtain, based on the depth map, a height of the image capture device from the ground at the time when the image data is captured and an angle on the three-dimensional space, and obtain pose information of the image capture device based on the height of the image capture device from the ground and the angle on the three-dimensional information.

In an embodiment, the at least one processor may obtain pose information of an AR device, and determine a location and angle of a viewing window based on the pose information of the AR device.

In an embodiment, the at least one processor may output the viewing window on the display based on the determined location and angle of the viewing window, and render, in the output viewing window, a three-dimensional virtual image corresponding to the image data.

In an embodiment, the at least one processor may obtain motion information of the image capture device corresponding to the image data, and change the location and angle of the viewing window based on the motion information of the image capture device.

In an embodiment, the motion information of the image capture device may include information about a change in pose of the camera. The at least one processor may change, for each frame of the virtual image, a location and angle of the viewing window based on the motion information of the image capture device.

The present disclosure provides a computer program product including a computer-readable storage medium. The storage medium may store instructions readable by an AR device, for executing at least one of the disclosed embodiments of the method in an AR device.

As described above, according to an embodiment of the present disclosure, a location of the viewing window in which the corresponding virtual image is displayed is adjusted based on the pose of the image capture device at the time when the image is captured, thereby maximizing a sense of presence in the user when viewing the image, and reducing a sense of difference between the content and the real world and alleviating dizziness in the user viewing the virtual image.

Various embodiments of the present disclosure may be implemented or supported by one or more computer programs, and the computer programs may be formed from a computer-readable program code and included in a computer-readable medium. In the present disclosure, an "application" and a "program" may indicate one or more computer programs, software components, instruction sets, procedures, functions, objects, classes, instances, relevant data, or a portion thereof, which are suitable for implementation in the computer-readable program code. The "computer-readable program code" may include computer codes of various types, including a source code, an object code, and an executable code. The "computer-readable medium" may include a medium of various types which can be accessed by a computer, such as ROM, RAM, a hard disk drive (HDD), a compact disc (CD), a digital video disc (DVD), or memory of various types.

In addition, the storage medium that is readable by a device may be provided in the form of a non-transitory storage medium. Here, the "non-transitory storage medium" is a tangible device and may exclude a wired, wireless, optical or other communication links for transmitting temporary electrical or other signals. Meanwhile, this "non-transitory storage medium" does not distinguish between a case where data is semi-permanently stored in a storage medium and a case where the data is temporarily stored. For example, the "non-transitory storage medium" may include a buffer in which data is temporarily stored. The computer-readable medium may be an arbitrary available medium that can be accessed by a computer, and may include volatile or non-volatile media and separable and non-separable media. The computer-readable medium may include a medium on which data may be permanently stored and a medium on which data is stored and may be overwritten later, which is so-called, a rewritable optical disk or an erasable memory device.

The disclosed embodiments may be implemented as an S/W program including an instruction stored in computer-readable storage media. The computer may include a device which calls stored instructions from a storage medium and may perform operations according to the disclosed embodiments according to the called instructions, and may include an electronic device according to the disclosed embodiments.

According to an embodiment, the method according to various embodiments disclosed in the present document may be provided as being included in a computer program product. The computer program product may include an S/W program and a computer-readable storage medium storing an S/W program. For example, the computer program product may include a product (e.g., a downloadable application) in the form of an S/W program that is electronically distributed through the manufacturer of a device or an electronic market. For electronic distribution, at least a portion of the S/W program may be stored in a storage medium or temporarily generated. In this case, the storage medium may be a storage medium of a server of a manufacturer, a server of an electronic market, or a relay server temporarily storing an SW program.

The computer program product may include a storage medium of a server or a storage medium of a device in a system including a server and a device. Alternatively, when a third device (e.g., a smartphone) communicatively connected to a server or device is present, the computer program product may include a storage medium of the third device. Alternatively, the computer program product may include an S/W program itself, which is transmitted from the server to the device or third device or transmitted from the third device to the device.

In this case, one of the device and the third device may execute the computer program product and perform the method according to the disclosed embodiments. Alternatively, two or more of the server, the device, and the third device may execute the computer program product and distributively perform the method according to the disclosed embodiments.

For example, the server (e.g., a cloud server or an artificial intelligence server, etc.) may execute a computer program product stored in the server to control a device communicatively connected to the server to perform the method according to the disclosed embodiments.

In another example, the third device may execute a computer program product to control a device communicatively connected to the third device to perform the method according to the disclosed embodiments. When the third device executes the computer program product, the third device may download the computer program product from the server and execute the downloaded computer program product. Alternatively, the third device may execute the computer program product provided in a preloaded state and perform the method according to the disclosed embodiments.

The above description of the present disclosure is for illustration, and one of ordinary skill in the art to which the present disclosure pertains would understand that the present disclosure may be readily modified into other specific shapes without changing the technical idea or essential features of the present disclosure. Therefore, the embodiments described above should be understood as examples in all aspects and are not in a limiting sense. For example, each element described as a single type may be implemented in a distributed manner, and similarly, elements described as distributed may be implemented in a combined form.

The scope of the present disclosure is defined by the appended claims rather than the detailed description, and all changes or modifications within the scope of the claims and their equivalents will be construed as being included in the scope of the present disclosure.

## Claims

1. A method, performed by an augmented reality device (10), of outputting a virtual image, the method comprising:
obtaining image data captured by an image capture device (20);
obtaining pose information of the image capture device (20) at a time when the image data is captured;
determining, based on the pose information of the image capture device (20), a location and angle of a viewing window in which a virtual image corresponding to the image data is displayed; and
outputting, based on the determined location and angle, the viewing window in which the virtual image is displayed.

2. The method of claim 1, wherein the pose information of the image capture device (20) comprises height information of the image capture device (20) at the time when the image data is captured and three-dimensional spatial angle information of the image capture device (20) at the time when the image data is captured.

3. The method of claim 1 or 2, wherein the obtaining of the pose information of the image capture device (20) comprises receiving the pose information from the image capture device (20).

4. The method of claim 1 or 2, wherein the obtaining of the pose information of the image capture device (20) comprises obtaining the pose information based on at least one of the image data or sensor information received from the image capture device (20).

5. The method of claim 4, wherein the obtaining of the pose information of the image capture device (20) comprises:
obtaining a depth map corresponding to the image data;
obtaining, based on the depth map, a height of the image capture device (20) from a ground and an angle in a three-dimensional space of the image capture device (20) at the time when the image data is captured; and
obtaining the pose information of the image capture device (20) based on the height of the image capture device (20) from the ground and the angle in the three-dimensional space of the image capture device (20).

6. The method of claims 1 to 5, comprising:
obtaining pose information of the augmented reality device (10); and
determining the location and angle of the viewing window based on the pose information of the augmented reality device (10).

7. The method of claims 1 to 6, wherein the outputting of the viewing window in which the virtual image is displayed may comprise:
outputting a viewing window on a display based on the determined location and angle of the viewing window; and
rendering, in the output viewing window, a three-dimensional virtual image corresponding to the image data.

8. The method of any one of claims 1 to 7, comprising:
obtaining motion information of the image capture device (20) corresponding to the image data; and
changing the location and angle of the viewing window based on the motion information of the image capture device (20).

9. The method of claim 8, wherein the motion information of the image capture device (20) comprises information about a change in pose of the image capture device (20) over time.

10. The method of any one of claims 8 and 9, wherein the changing of the location and angle of the viewing window based on the motion information of the image capture device (20) is performed for each frame of the corresponding virtual image.

11. An augmented reality device (10) that outputs a virtual image, the augmented reality device (10) comprising:
a display unit (162);
memory (150) storing a program comprising at least one instruction; and
at least one processor (140),
wherein the at least one processor (140) is configured to
obtain image data captured by an image capture device (20),
obtain pose information of the image capture device (20) at a time when the image data is captured,
determine, based on the pose information of the image capture device (20), a location and angle of a viewing window in which a virtual image corresponding to the image data is displayed, and
output the viewing window in which the virtual image is displayed based on the determined location and angle.

12. The augmented reality device (10) of claim 11, wherein the pose information of the image capture device (20) comprises height information of the image capture device (20) at the time when the image data is captured and three-dimensional spatial angle information of the image capture device (20) at the time when the image data is captured.

13. The augmented reality device (10) of claim 11 or 12, wherein the at least one processor (140) is configured to:
obtain pose information of the augmented reality device (10), and
determine the location and angle of the viewing window based on the pose information of the augmented reality device (10).

14. The augmented reality device (10) of any one of claims 11 to 13, wherein the at least one processor (140) is configured to:
output a viewing window on a display based on the determined location and angle of the viewing window, and
render, in the output viewing window, a three-dimensional virtual image corresponding to the image data.

15. The augmented reality device (10) of any one of claims 11 to 14, wherein
the at least one processor (140) is configured to:
obtain motion information of the image capture device (20) corresponding to the image data, and
change the location and angle of the viewing window based on the motion information of the image capture device (20).
